# EUROPEAN PATENT SPECIFICATION

(11) **EP 2 597 994 B1**
(45) Date of publication and mention of the grant of the patent: **22.04.2015**
(21) Application number: 11738080.8
(22) Date of filing: 26.07.2011
(51) Int. Cl.: A47B 31/02, G07F 11/62, A47J 31/46, A47J 39/00

(54) **FOOD VENDING MACHINE**
LEBENSMITTELAUSGABEAUTOMAT
DISTRIBUTEUR AUTOMATIQUE DE PRODUITS ALIMENTAIRES

(30) Priority: 27.07.2010 HK 10107177
(43) Date of publication of application: 05.06.2013
(73) Proprietor: Febo Beheer B.V., 1033 NZ Amsterdam (Noord) (NL)
(72) Inventor: KON, Irv, 1188 LB Amstelveen (NL)
(74) Representative: Van Breda, Jacobus
(86) International application number: PCT/NL2011/050542
(87) International publication number: WO 2012/015302

(56) References cited:
- EP-A1- 0 948 926
- US-A- 4 068 115
- US-A- 4 194 109
- US-A- 5 579 952

## Description

### Technical field

The present invention relates to food vending machines and particularly, but not exclusively, to machines for vending hot food.

### Background of the Invention

To meet the needs of the consuming public, food vendors are faced with the challenge of serving the best foods in a short time frame. In addition, there is often the need to serve large numbers of people in high traffic areas in a cost effective manner, compatible with government rules and regulation relating to hygiene and safety. A prior art solution is a food vending machine having an array of compartments, each with a respective door. The purchaser can inspect the different items available then make a payment, as by inserting one or more coins to meet the indicated selling price,, before accessing a compartment. Such vending machines may be installed along a wall, with an outer, front side accessible by customers, and an opposing inner side accessible to a kitchen where the food is prepared.

Fresh, hot food may be kept at an elevated temperature by heating elements. There are a number of relevant considerations in the design of machines of this type, among them proper temperature control is important for food and user safety, and for ensuring palatability of the food. It is often desirable to provide users with a selection of different offerings, but the temperature at which an item should be held varies for different foods. For instance, a baked dough product such as a hamburger should be held at a lower temperature than a fried vegetable product such as French fries. For safety it is also imperative that hot food is dispensed in a way that allows one to remove the food from its compartment in an as easy a manner as possible. Prior-art vending machines typically allow one to open the door of the compartment, requiring one to pull open the door in order to pull the food out and thus there is an ever-present chance that one may burn himself.

Furthermore, to maintain hygienic storage conditions it is also important that the warming compartments of the machine can be readily cleaned. Another factor is that to attract custom, the food displayed in machines of this type must be presented attractively and be adequately illumined.

While attempts have been made in the past to address the above-mentioned needs in food vending machines of this type, they have fallen short of providing an optimum solution. In particular manufacturers have struggled to balance the competing requirements for low production costs, against increased operating costs related to labour, rent and power consumption, which serve to increase the total lifetime cost associated with a machine. In particular energy costs, associated with heating and illumination in a large number of vending machines of this type, can be significant. It is therefore an object of the present invention to provide a hot food vending machine that saves at least 30 % or more power compared to equivalent prior art models. It is another object of the invention to meet or substantially meet the above needs, or more generally to provide an improved vending machine.

US5579952A relates to a hot food vending machine comprising heated shelves.

### Disclosure of the Invention

The present invention is defined by a hot food vending machine including: an array of shelves, each shelf defining a com- partment within a housing; at least one of the compartments having upper and lower sides defined by the shelves; doors mounted to the housing, each door closing a respective one of the compartments; wherein each shelf comprises: a plate, characterized in that each shelf is of a laminated construction that further comprises an insulating panel of composite, dielectric material; at least one PTC heating element bonded between the plate and the panel, and a first electrical coupling integrally formed on the panel and electrically connected to each PTC heating element, each electric coupling including a conducting layer laminated upon the panel.

Conveniently the panel and the conducting layer laminated upon the panel can be manufactured as a printed circuit board (PCB) by any of the known PCB manufacturing processes. Thus each shelf is a modular unit of laminated construction, providing a high degree of adaptability at relatively low cost.

Preferably the shelves include shelves having of different temperature ratings, the PTC heating elements of the shelves of different temperature ratings having differing Curie points. Preferably the shelves of different temperature ratings are provided with colour-coded indicia. In this manner the oven can be readily reconfigured by changing the shelves to provide the temperature required to warm a particular food item.

Preferably an elongate recess extends along each of two opposing sides of the shelf between the plate and the panel, and the compartment includes opposing side walls having protrusions configured to be received in the recess for supporting the shelves.

Preferably each shelf is generally rectangular, and the first electrical coupling includes a tongue integrally formed on the panel, and projecting from an edge of the plate, for receipt in a second electrical coupling.

Preferably an outer side of the panel includes a reflective layer laminated upon the panel. Conveniently this reflective layer may be a conducting layer manufactured by any of the known PCB manufacturing processes.

Preferably the shelf further comprises a target abutting the plate and panel at an edge of the shelf for infrared temperature measurement, the target preferably comprising an aluminium block anodised black.

Preferably the PTC elements are elongate and parallel. An air gap may be provided between the PTC elements. The PTC increases safety through its temperature limiting characteristics, and it is self regulating, and therefore energy efficient, while allowing surface temperatures to be set from 40° C to 85° C. Preferably the food vending machine further comprises a power supply circuit connected to the second electrical couplings, the power supply circuit including a torroidal transformer configured to supply the inrush current of each PTC element.

In another aspect the invention provides a food vending machine including:
a housing holding an array of compartments with opposing transverse sides, and opposing front and rear sides
at least one of the compartments having upper and lower sides defined by shelves;
doors mounted to the housing, each door moveable between a closed position for closing an opening in the front side of one of the compartments, and an open position;
hinges disposed at a lower edge of each door and defining horizontal hinge axes;
an elongate flange fixed to the door adjacent one of the transverse sides, a fixture disposed adjacent a tip of the flange offset a distance from the hinge axis;
a latch that is spring-engaged for holding the door closed, and solenoid-released;
a door opening spring means abutting the flange in its closed position, for opening the door upon release of the latch, and
a rotary damper for damping the opening movement of the door.

Preferably the flange comprises a plate or a planar portion which lies substantially in a plane parallel to the transverse sides, the fixture comprises a notch formed in the tip of the flange, and the latch comprises a plunger slidably mounted in a guide.

Preferably the machine further comprises a control circuit operatively coupled to a solenoid for releasing the latch and a switch connected to the control circuit for detecting the position of the door, wherein the switch is disposed proximate the flange, and when the door is in its closed position the flange abuts an actuator of the switch.

This invention provides a food vending machine which is effective and efficient in operational use, which reduces maintenance costs, and which by its modular construction provides for versatile operation. The machine may be economically constructed and has an overall simple design which minimizes manufacturing costs and simplifies maintenance by offering an essentially modular design.

### Brief Description of the Drawings

Preferred forms of the present invention will now be described by way of example with reference to the accompanying drawings, wherein:
Figure 1 is a schematic perspective view of a hot food vending machine according to the invention;
Figure 2 is a schematic perspective view of an array of shelves of the machine of Fig. 1;
Figure 3 is an exploded perspective view of one of the shelves of Fig. 3;
Figure 4 is a fragmentary section through an edge of the assembled shelf indicated by AA in Fig. 3;
Figure 5 is a schematic view of a door actuating mechanism of the machine of Fig. 1, and
Figure 6 is an electrical schematic of the machine of Fig. 1.

### Description of the Preferred Embodiments

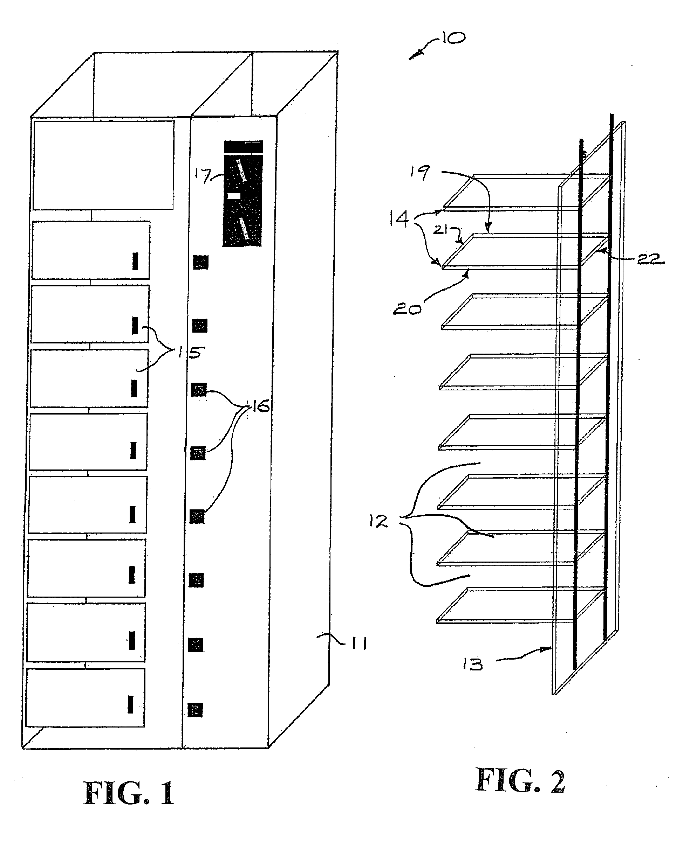

Referring now to the drawings, where like reference numerals indicate like parts, the vending machine of the invention is indicated generally by reference numeral 10. The machine 10 has a housing 11 defining a plurality of compartments 12, which are preferably arranged into a vertical array, as seen in Figs. 1 and 2. Each vertical stack is defined by a pair of interior side walls 13, of the housing. Each compartment has a horizontal shelf 14, upon which rests packaging or a tray (not shown) for hot food. Each compartment 12 also has a hinged door 15 with a central transparent window for viewing the contents of the compartment, which door, when opened, allows access to the interior of the compartment for pulling out the food. The machine 10 has a series of push-button switches 16 by which a customer selects a desired compartment 12, after having inserted a token, or coins, into slot 17, all of which is done in the conventional and well-known manner. Each push-button 16 activates a respective solenoid for unlocking the selected compartment-door 15, in order to allow access to the vended food-tray. The housing 11 also has a rear, loading door (not shown), through which food may be loaded into the compartments.

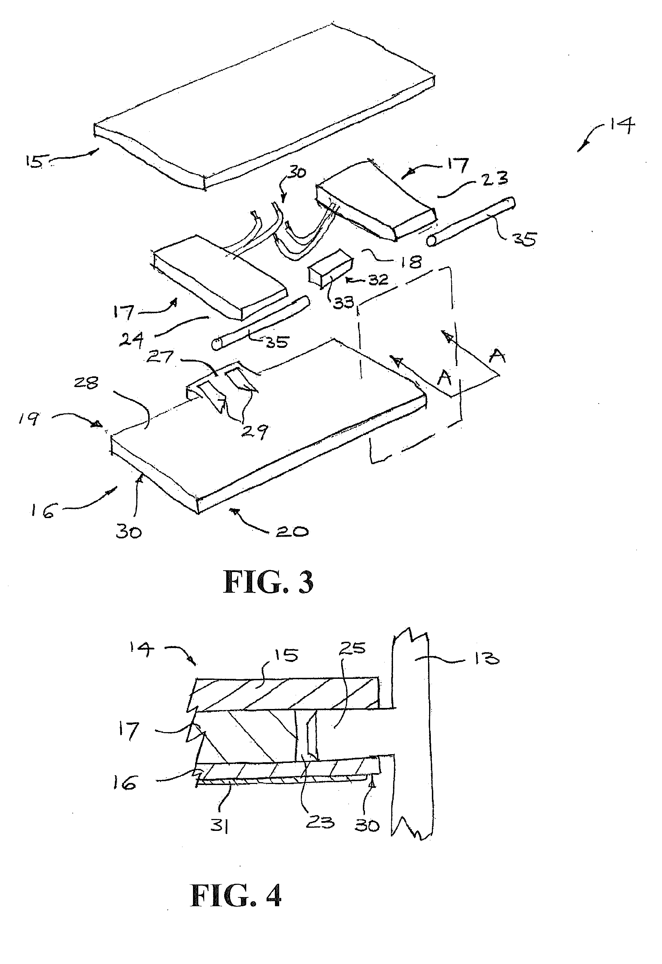

Referring to Figs. 3 and 4, there is shown the details of a shelf 14. The shelf 14 is of a laminated construction comprising a rectangular plate 15 and an insulating panel 16 of like dimension with two PTC heating elements 17 adhesive bonded therebetween. The plate may be metallic to provide a heat sink causing the heat generated from the heater to be distributed thereabove, to utilize the heat generated by the elements 17 in the most efficient manner, and to ensure that the food item resting upon it is effectively warmed and as in the case of food cooked at a temperature higher that that at which it is maintained in the compartment, to reduce the rate at which it cools after being palaced in the compartment. The plate 15 may be formed of stainless steel or alternatively may be glass or other non toxic material with a degree of thermal conductivity. The panel 16 may be formed of a composite, dielectric material such as a woven glass and polyester matrix. For operation at relatively low temperatures (of less than 100°C) it will be understood that a range of suitable materials may be employed.

The PTC heating elements 17 may be of like construction with an elongate form. Other suitable heating element configurations include circular, concentric and matrix arrangements. They are arranged parallel to one another, extending transversely relative to the plate 15 and panel 16 with an air gap 18 provided between them. The shelf 14 has opposing inner and outer long edges 19, 20 and opposing short edges 21, 22. An elongate recess 23, 24 extends along the short edges 21, 22 respectively, being located between the plate and the panel. The side walls 13 include protruding pegs 25 configured to be received in the recesses 23, 24 for supporting the shelves 14 and allowing for sliding insertion and removal.

A tongue 27 formed on the panel 16 projects from the inner edge 19. On the planar inner surface 28 of the panel 16 a thin electrically conducting layer or foil is formed comprising contacts 29 overlying the upper face of the tongue 27 and adjacent board. The power leads 30 of the elements 17 are fixed to the contacts 29, as by soldering, a screw fastener, spot welding, electrically-conductive adhesive or any other equivalent means. The tongue thus provides a male electrical coupling integrally formed on the panel 16. A complementary female coupling (not shown) is fixed in the rear wall of the housing, thereby supplying power for heating the shelves 14. On an outer surface 30 of the panel 16, opposing the inner surface 28, a thin foil layer 31 is laminated upon the panel. This layer 31 is highly reflective of visible light and provides a diffuse reflection that serves to assist in the internal illumination of each compartment. Advantageously, the panel 16 and its associated layer 29 and 31 may be manufactured by any of the known PCB manufacturing processes involving deposition, patterning or etching.

Disposed in the gap 18 a block 32 abuts the plate 15 and panel 16. The block 32 is made from a thermally conductive material and has a face 33 aligned with the outer edge 20 of the panel and comprises a target for infrared temperature measurement and which is painted or chemically treated to provide a non-reflecting black colour. For instance the block may be made of aluminium in which case this face 33 is preferably anodised black and a user may, by directing the beam from an infrared thermometer against the target check for proper temperature of the shelf.

Preferably the colour-coded strips 35 extend along the front edge 20 between the pate 15 and panel 16. In a preferred embodiment, a range of different colors colours are provided corresponding, for instance, to temperature ratings of 65, 75 and 85 C - being the temperature ratings of the respective PTC heating elements 17 used in a particular shelf 14. The shelves can thus be readily swapped out in a modular manner to provide the temperature required to warm a particular food item as required according to personal taste, food type, government regulation, time of the year etc. This PTC technology eliminates costly, inefficient and often unreliable thermostats in each shelf with their associated power-consuming hysteresis.

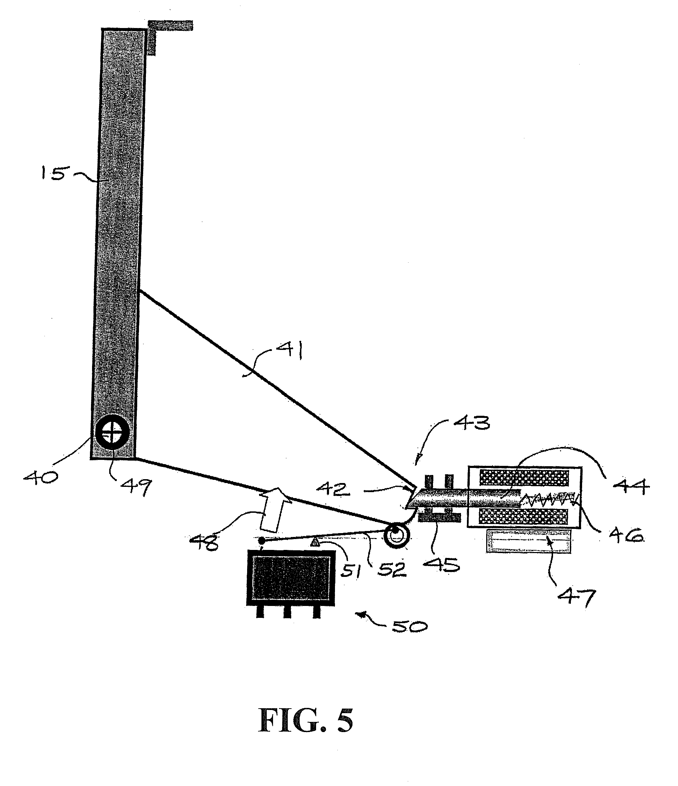

Referring to Fig. 5, each door 15 is pivotally mounted to the housing11 by means of pivot 40 defining a horizontal pivot axis along its lower edge. Fig. 5 shows the door generally upright in its closed position and the degree to which each door may be opened may be limited by stops (not shown), although according to the preferred form of the invention, each door may be opened to a maximum position that is approximately horizontal.

An elongate planar flange 41 is fixed to the door 15 near its lower end and lies substantially in a plane parallel to the transverse sides 13. A notch 42 is formed in the tip 43 of the flange 41. A plunger 44 slidably mounted in a guide 45 engages the notch 42 to latch the door in its closed position. The tip of the flange is offset by a conspicuous distance from the hinge axis, the distance exceeding 50% of the height of the door to reduce the loads on the latching plunger.

The plunger 44 is received within a solenoid 47 having a spring 46 for urging the plunger to extend fro the solenoid to its latching position. The solenoid is actuable to retract the plunger into the solenoid and release the latch. A door opening spring means which may comprise a coil spring, a leaf spring or an elastic block is schematically represented by the arrow 48 and abuts the flange 48 in its closed position. Energy stored in the spring means is thus released when the latch is released, the spring means providing a torque sufficient rotate the centre of gravity of the door over centre and thus allow the door to drop open under its own weight. To avoid any impact upon the door reaching the stops in its open position a rotary damper 49 damps the opening movement of the door.

A micro-switch 50 for detecting the position of the door is connected to a control circuit. The switch 50 is disposed proximate the flange, and includes a spring-biased actuating lever 52 and a contact 51. When the door is in its closed position the flange 41 abuts the lever 52 to trigger the switch. When the door of the compartment is in closed position, the lever 52 of the micro-switch 50 is pushed down by the bottom surface of the flange 41, to thus close an electrical circuit whereby it is possible to supply current to any of the solenoids 47 of the apparatus, so that once a customer selects a compartment, power may be supplied to the associated solenoid for allowing opening of the door of the selected compartment. As soon as the selected door is opened by the customer, the actuating lever is allowed to be lifted up, which thereby closes the electrical circuitry providing power to the solenoid 81. By opening this circuit, all of the solenoids 81 of the apparatus are now disabled, which prevents any other door of any other compartment from being opened until the selected, opened door is again returned to its closed position. As the selected door 15 is opened, the latching plunger 44 of the selected compartment's solenoid rides along the outer surface of its associated flange 41, as the side plate is rotated. The arcuate profile of the flange 41 ensures that there is a surface against which the plunger will abut for all movements and positions of the flange 41. When the door is back in its fully-closed position, the plunger is again forced into engagement with the notch 42 with which it is associated, to thus lock, or latch, the compartment-door until it is again selected by a customer. The full-closing of the door also depresses the actuating lever 52 of the micro-switch 50 associated with that compartment, to again enable any of the solenoid switches for subsequent actuation of one of them as determined by a customer.

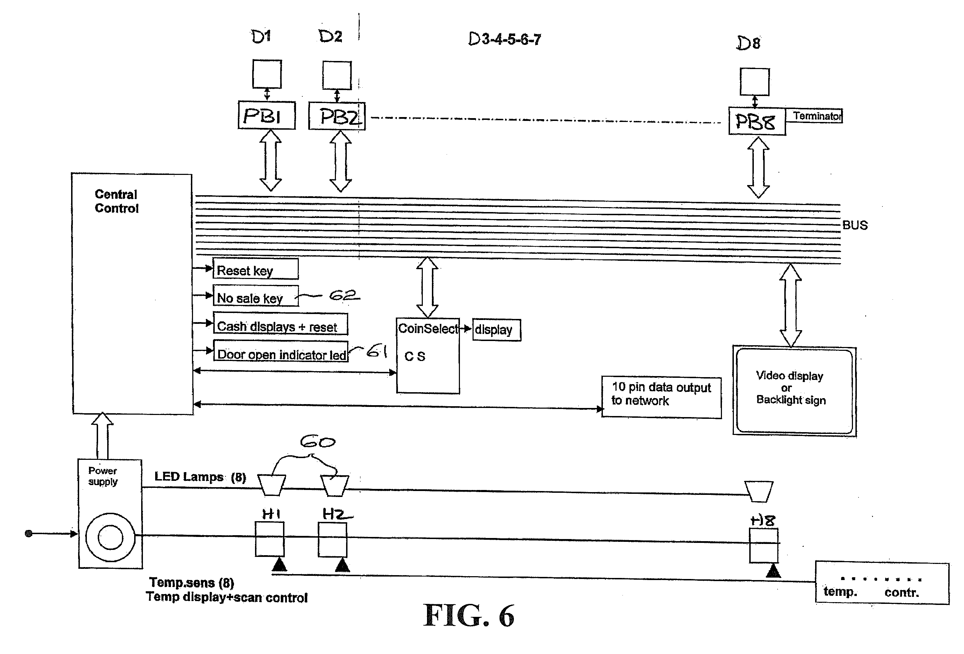

Referring now to Fig. 6, the electrical schematic for controlling the operation of the machine 10 is shown. Elements D1-D8 indicate the micro-switches 50, which are arranged in series, so that if any one of them becomes open, power to all of the solenoids is cut off, which solenoids are indicated by the symbols S1-S8 in the schematic. After insertion of the requisite amount of coins or token, depression of a button "PB" selects the desired compartment, and energizes the solenoid associated with that compartment until the micro-switch thereof is opened, as fully described above. A LED 60 on the front of the apparatus adjacent each compartment indicates which compartment has been selected. The heater elements 17 are indicated by the symbol H1-H8. Vending machines of this type may be installed along a wall, with an outer, front side accessible by customers, and an opposing inner side accessible to a kitchen where the food is prepared, this inner side accessible from the kitchen being provided operator controls and indicators inaccessible to the user on the opposing side of the wall. These include a door-open-indicating LED 61 which is lit when any one of the doors is open. A door closing mechanism (not shown) may be provided for each of the compartment doors and accessible from the rear side of the apparatus, so that the operator, warned by the door-open-indicating LED 61 may remotely close any open door. This is a security feature, allowing the operator to close the doors without coming out of the kitchen to go around the other side of the wall. A no sale key 62 is a key operated switch also located at the rear of the machine for access by an operator to override the control signal from the coin selector CS, and allow any one of the doors to be opened, by releasing its associated solenoid PB1, PB2 etc. A warning light (not shown) warns the operator that the machine is not in a normal vending mode and that snacks can be taken without payment. The no sale key 62 is operated to correct a malfunction of the machine where a customer paid and was unable to take out the snack, or to open the doors one by one for cleaning and maintenance. Instead of the electrical schematic of Fig. 6, the machine 10 may be controlled by microprocessor-based system with dedicated software.

## Claims

1. A hot food vending machine (10) including:
an array of shelves (14), each shelf defining a compartment (12) within a housing (11);
at least one of the compartments (12) having upper and lower sides defined by the shelves;
doors (15) mounted to the housing (11), each door (15) closing a respective one of the compartments (12);
wherein each shelf (14) comprises:
a plate (15), **characterized in that** each shelf (14) is of a laminated construction that further comprises an insulating panel (16) of composite, dielectric material;
at least one PTC heating element (17) bonded between the plate (15) and the panel (16), and
a first electrical coupling integrally formed on the panel (16) and electrically connected to each PTC heating element (17), each electric coupling including a conducting layer (29) laminated upon the panel (16).

2. The hot food vending machine of claim 1 wherein the shelves include shelves (14) having of different temperature ratings, the PTC heating elements (17) of the shelves (14) of different temperature ratings having differing Curie points.

3. The hot food vending machine of claim 2 wherein the shelves of different temperature ratings are provided with colour-coded indicia (35).

4. The hot food vending machine of any of the preceding claims wherein an elongate recess (23, 24) extends along each of two opposing sides (21, 12) of the shelf between the plate and the panel, and the compartment (12) includes opposing side walls (13) having protrusions configured to be received in the recess (23) for supporting the shelves (14).

5. The hot food vending machine of any of the preceding claims wherein each shelf (14) is generally rectangular, and the first electrical coupling includes a tongue (27) integrally formed on the panel (16), and projecting from an edge of the plate, for receipt in a second electrical coupling.

6. The hot food vending machine of any of the preceding claims wherein an outer side of the panel (16) includes a reflective layer (31) laminated upon the panel (16).

7. The hot food vending machine of any of the preceding claims wherein the shelf (14), further comprises a target (32) abutting the plate (15) and panel (16) at an edge of the shelf (14) for infrared temperature measurement, the target (32) preferably comprising an aluminium block anodised black.

8. The hot food vending machine of any of the preceding claims wherein the PTC elements (17) are elongate and parallel.

9. The hot food vending machine of any of the preceding claims wherein each shelf comprises at least two PTC elements and an air gap (18) is provided between the PTC elements (17).

10. A food vending machine according to any one of the previous claims, including:
hinges disposed at a lower edge of each door and defining horizontal hinge axes to arrange that each door is moveable between a closed position for closing an opening in the front side of one of the compartments, and an open position;
an elongate flange fixed to the door adjacent one of the transverse sides, a fixture disposed adjacent a tip of the flange offset a distance from the hinge axis;
a latch that is spring-engaged for holding the door closed, and solenoid-released;
a door opening spring means abutting the flange in its closed position, for opening the door upon release of the latch, and
a rotary damper for damping the opening movement of the door.

11. The hot food vending machine of claim 10 wherein the flange comprises a plate of a planar portion which lies substantially in a plane parallel to the transverse sides, the fixture comprises a notch formed in the tip of the flange, and the latch comprises a plunger slidably mounted in a guide.

12. The hot food vending machine of claim 10 or claim 11 wherein the machine further comprises a control circuit operatively coupled to a solenoid for releasing the latch and switch connected to the control circuit for detecting the position of the door, wherein the switch is disposed proximate the flange, and when the door is in its closed position the flange abuts an actuator of the switch.

## Patentansprüche

1. Verkaufsautomat (10) für heiße Speisen, aufweisend:
eine Anordnung von Fachböden (14), wobei jeder Fachboden ein Fach (12) in eine Gehäuse (11) definiert;
wobei mindestens eines von den Fächern (12) eine Ober- und eine Unterseite aufweist, die von den Fachböden definiert werden;
Türen (15), die an dem Gehäuse (11) angebaut sind, wobei jede Tür (15) ein entsprechendes von den Fächern (12) verschließt;
wobei jeder Fachboden (14) umfasst:
eine Platte (15), **dadurch gekennzeichnet, dass** jeder Fachboden (14) einem Schichtaufbau hat, der ferner eine isolierende Tafel (16) aus dielektrischem Verbundmaterial umfasst;
mindestens ein PTC-Heizelement (17), das zwischen der Platte (15) und der Tafel (16) befestigt ist, und
eine erste elektrische Verbindungsstruktur, die einstückig auf der Tafel (16) ausgebildet ist und elektrisch mit den einzelnen PTC-Heizelementen (17) verbunden ist, wobei jede elektrische Verbindungsstruktur eine leitende Schicht (29) aufweist, die auf die Tafel (16) laminiert ist.

2. Verkaufsautomat für heiße Speisen nach Anspruch 1, wobei die Fachböden Fachböden (14) beinhalten, die verschiedene Temperatureinstellungen aufweisen, wobei die PTC-Heizelemente (17) der Fachböden (14) mit den verschiedenen Temperatureinstellungen verschiedene Curie-Punkte aufweisen.

3. Verkaufsautomat für heiße Speisen nach Anspruch 2, wobei die Fachböden mit den verschiedenen Temperatureinstellungen mit farbig kodierten Symbolen (35) versehen sind.

4. Verkaufsautomat für heiße Speisen nach einem der vorangehenden Ansprüche, wobei eine längliche Aussparung (23, 24) entlang jeder von den beiden einander gegenüber liegenden Seiten (21, 12) des Fachbodens zwischen der Platte und der Tafel verläuft und das Fach (12) einander gegenüberliegende Seitenwände (13) aufweist, die Vorsprünge aufweisen, die so gestaltet sind, dass sie in der Aussparung (23) aufgenommen werden können, um die Fachböden (14) zu tragen.

5. Verkaufsautomat für heiße Speisen nach einem der vorangehenden Ansprüche, wobei jeder Fachboden (14) allgemein rechteckig ist und die erste elektrische Verbindungsstruktur eine Zunge (27) beinhaltet, die einstückig an der Tafel (16) ausgebildet ist und von einem Rand der Platte vorsteht, um in einer zweiten elektrischen Verbindungsstruktur aufgenommen zu werden.

6. Verkaufsautomat für heiße Speisen nach einem der vorangehenden Ansprüche, wobei eine Außenseite der Tafel (16) eine reflektierende Schicht (31) aufweist, die auf die Tafel (16) laminiert ist.

7. Verkaufsautomat für heiße Speisen nach einem der vorangehenden Ansprüche, wobei der Fachboden ferner an einem Rand des Fachbodens (14) ein Ziel (32) für eine Infrarottemperaturmessung umfasst, das an der Platte (15) und der Tafel (16) anliegt, wobei das Ziel vorzugsweise einen schwarz eloxierten Aluminiumblock umfasst.

8. Verkaufsautomat für heiße Speisen nach einem der vorangehenden Ansprüche, wobei die PTC-Elemente (17) länglich und parallel sind.

9. Verkaufsautomat für heiße Speisen nach einem der vorangehenden Ansprüche, wobei jeder Fachboden mindestens zwei PTC-Elemente umfasst und ein Luftspalt (18) zwischen den PTC-Elementen (17) vorgesehen ist.

10. Verkaufsautomat für heiße Speisen nach einem der vorangehenden Ansprüche, aufweisend:
Scharniere, die an einem unteren Rand jeder Tür angeordnet sind und horizontale Scharnierachsen definieren, um dafür zu sorgen, dass jede Tür zwischen einer geschlossenen Stellung zum Verschließen einer Öffnung in der Vorderseite von einem der Fächer und einer offenen Stellung bewegbar ist;
einen länglichen Flansch, der angrenzend an eine von den Querseiten an der Tür befestigt ist, eine Haltevorrichtung, die angrenzend an eine Spitze des Flansches in einem Abstand zur Scharnierachse angeordnet ist;
einen Riegel, der durch eine Feder eingelegt wird, um die Tür geschlossen zu halten, und der durch eine Magnetspule gelöst wird;
eine Türöffnungsfedereinrichtung, die in der geschlossenen Stellung am Flansch anliegt, zum Öffnen der Tür nach Lösen des Riegels und
einen Rotationsdämpfer zum Dämpfen der Öffnungsbewegung der Tür.

11. Verkaufsautomat für heiße Speisen nach Anspruch 10, wobei der Flansch eine Platte mit einem planen Abschnitt umfasst, der im Wesentlichen in einer Ebene liegt, die parallel ist zu den Querseiten, wobei die Haltevorrichtung eine Kerbe umfasst, die in der Spitze des Flansches ausgebildet ist, und der Riegel einen Plunger umfasst, der verschiebbar in einer Führung montiert ist.

12. Verkaufsautomat für heiße Speisen nach Anspruch 10 oder Anspruch 11, wobei der Automat ferner eine Steuerschaltung, die betriebsmäßig mit einer Magnetspule verbunden ist, um den Riegel zu lösen, und einen Schalter umfasst, der mit der Steuerschaltung verbunden ist, um die Stellung der Tür zu erfassen, wobei der Schalter in der Nähe des Flansches angeordnet ist und wobei der Flansch, wenn die Tür die geschlossene Stellung einnimmt, an einem Stellglied des Schalters anliegt.

## Revendications

1. Distributeur d'aliments chauds (10) comprenant :
un ensemble d'étagères (14), chaque étagère définissant un compartiment (12) au sein d'une carcasse (11) ;
au moins l'un des compartiments (12) ayant des côtés supérieur et inférieur définis par les étagères ;
des portes (15) montées sur la carcasse (11), chaque porte (15) fermant un compartiment respectif (12) ;
dans lequel chaque étagère (14) comprend :
une plaque (15), **caractérisé en ce que** chaque étagère (14) est de construction stratifiée qui comprend en outre un panneau isolant (16) de matériau composite diélectrique ;
au moins un élément chauffant PTC (17) relié entre la plaque (15) et le panneau (16) ; et
un premier couplage électrique formé solidairement sur le panneau (16) et connecté électriquement à chaque élément chauffant PTC (17), chaque couplage électrique comprenant une couche conductrice (29) stratifiée sur le panneau (16).

2. Distributeur d'aliments chauds selon la revendication 1, dans lequel les étagères comprennent des étagères (14) ayant des températures nominales différentes, les éléments chauffants PTC (17) des étagères (14) de températures nominales différentes ayant des points de Curie différents.

3. Distributeur d'aliments chauds selon la revendication 2, dans lequel les étagères de températures nominales différentes sont pourvues d'indications à code de couleur (35).

4. Distributeur d'aliments chauds selon l'une quelconque des revendications précédentes, dans lequel un évidement allongé (23, 24) s'étend le long de chacun des deux côtés opposés (21, 12) de l'étagère entre la plaque et le panneau, et le compartiment (12) comprend des parois latérales opposées (13) ayant des protubérances configurées pour être reçues dans l'évidement (23) pour supporter les étagères (14).

5. Distributeur d'aliments chauds selon l'une quelconque des revendications précédentes, dans lequel chaque étagère (14) est généralement rectangulaire, et le premier couplage électrique comprend une languette (27) formée solidairement sur le panneau (16), et dépassant d'un bord de la plaque, pour réception dans un second couplage électrique.

6. Distributeur d'aliments chauds selon l'une quelconque des revendications précédentes, dans lequel un côté extérieur du panneau (16) comprend une couche réfléchissante (31) stratifiée sur le panneau (16).

7. Distributeur d'aliments chauds selon l'une quelconque des revendications précédentes, dans lequel l'étagère (14) comprend en outre une cible (32) contiguë à la plaque (15) et au panneau (16) au niveau d'un bord de l'étagère (14) pour une mesure de température infrarouge, la cible (32) comprenant de préférence un bloc d'aluminium noir anodisé.

8. Distributeur d'aliments chauds selon l'une quelconque des revendications précédentes, dans lequel les éléments PTC (17) sont allongés et parallèles.

9. Distributeur d'aliments chauds selon l'une quelconque des revendications précédentes, dans lequel chaque étagère comprend au moins deux éléments PTC et
un entrefer (18) est prévu entre les éléments PTC (17).

10. Distributeur d'aliments selon l'une quelconque des revendications précédentes, comprenant :
des charnières disposées au niveau d'un bord inférieur de chaque porte et définissant des axes horizontaux de charnière pour faire en sorte que chaque porte soit mobile entre une position fermée permettant de fermer une ouverture dans le côté avant de l'un des compartiments, et une position ouverte ;
une bride allongée fixée à la porte adjacente à l'un des côtés transversaux, un accessoire disposé adjacent à un bout de la bride décalé d'une distance de l'axe de charnière ;
un verrou qui est enclenché par ressort permettant de maintenir la porte fermée, et relâché par solénoïde ;
un moyen de ressort d'ouverture de porte contigu à la bride dans sa position fermée, permettant d'ouvrir la porte lors du relâchement du verrou, et
un amortisseur rotatif permettant d'amortir le mouvement d'ouverture de la porte.

11. Distributeur d'aliments chauds selon la revendication 10, dans lequel la bride comprend une plaque d'une partie plane qui se trouve sensiblement dans un plan parallèle aux côtés transversaux, l'accessoire comprend une encoche formée dans le bout de la bride, et le verrou comprend un plongeur monté coulissant dans un guide.

12. Distributeur d'aliments chauds selon la revendication 10 ou la revendication 11, dans lequel le distributeur comprend en outre un circuit de commande couplé fonctionnellement à un solénoïde permettant de relâcher le verrou et un commutateur connecté au circuit de commande permettant de détecter la position de la porte, dans lequel le commutateur est disposé à proximité de la bride, et lorsque la porte est dans sa portion fermée la bride est contiguë à un actionneur du commutateur.
